# EUROPEAN PATENT APPLICATION

(11) **EP 0 617 441 A1**
(43) Date of publication of application: **28.09.1994**
(21) Application number: 94250024.0
(22) Date of filing: 09.02.1994
(51) Int. Cl.: H01G 9/00

(54) **Capacitive battery**

(30) Priority: 25.02.1993 US 23209
(71) Applicant: GLOBE-UNION INC., Milwaukee WI 53209 (US)
(72) Inventor: Kao, Wen-Hong, Brown Deer, Wisconsin 53223 (US)
(74) Representative: UEXKÜLL & STOLBERG

(57) **Abstract**

A capacitive battery cell (11) includes a pair of conductive, hydrophilic electrodes (16) spaced apart by a separator (17), an aqueous electrolyte wetting the separator, a pair of electrically conductive supports (18) superposed on each electrode on the outsides thereof opposite the separator (17), and a seal (19) that retains the electrolyte between the electrodes (16). The cells may be connected in series with positive and negative terminals (12,13) at the endmost cells to provide a capacitive battery (10). Such a battery may resemble a lead-acid bipolar battery, except that the electrodes lack layers of positive and negative active lead material. The battery of the invention functions purely as a capacitor, and is thus capable of a powerful discharge, but only for a short duration.

## Description

### TECHNICAL FIELD

This invention relates to a battery capable of delivering a short but high power pulse discharge in a manner similar to a capacitor.

### BACKGROUND OF THE INVENTION

In the development of battery systems for motor vehicles, particularly automobiles, the act of starting the internal combustion engine requires a short but powerful surge of electrical energy. If a conventional lead-acid automotive battery is extremely cold or partially drained, it may not have enough charge to start the engine. To solve this problem, one approach provides a dual lead-acid battery, including a main battery and an auxiliary battery which is, for example, used only upon starting in response to a stimulus (see Witehira European Patent Publication No. 398,691) or when a switch has been actuated (see U.S. Patent No. 5,002,840). Dual batteries such as these are useful but require substantial additional battery materials and are more difficult to construct, requiring, for example, bus bars embedded in the plastic cover.

Air cathodes are well known and have been used in batteries such as zinc-air batteries, but have not generally been used in combination with automotive starting, lighting and ignition (SLI) batteries. In one known process for making an air cathode, carbon powder is mixed with a Teflon® dispersion. Water is filtered off and the mix is allowed to dry in an oven. The mix is then rolled into a sheet, laminated with a nickel current collector and a hydrophobic film such as Teflon®. The preferred content of the binder is 10% or higher. High binder content is needed to retain cathode hydrophobicity and a three-phase reaction zone. The resulting air cathode is active toward oxygen reduction in an alkaline solution. However, it becomes inactive in acid.

The present invention provides a capacitive-type battery which can produce a short but high power pulse discharge useful in starting a vehicle engine.

### SUMMARY OF THE INVENTION

A capacitive battery cell according to the invention includes a pair of conductive, hydrophilic electrodes spaced apart by a separator, an aqueous electrolyte wetting the separator, a pair of electrically conductive supports superposed on each electrode on the outsides thereof opposite the separator, and a seal that retains the electrolyte between the electrodes. The cells may be connected in series with positive and negative terminals at the endmost cells to provide a capacitive battery according to the invention. Such a battery resembles a lead-acid bipolar battery, except that the electrodes lack layers of positive and negative active lead material. The battery of the invention functions purely as a capacitor, and is thus capable of a powerful discharge, but only for a short period.

The invention further provides an improved process for making a capacitive cell suitable for use in such a battery. The process includes the steps of first forming a dry mixture of a plastic and a particulate, electrically conductive material, rolling the mixture into a sheet under conditions effective to fibrillate the plastic to form a fibrous network that retains the conductive particles, laminating the sheet with a conductive support to form a first support and electrode, repeating the preceding three steps to form a second support and electrode, interposing a porous separator between the first and second electrodes in contact therewith, forming a seal about a space between the electrodes, which space contains the separator, then filling the space with an aqueous electrolyte, optionally deaerating the electrolyte, and closing the seal to render the space air-tight. To make a corresponding battery, particularly a bipolar battery, a number of such cells are assembled back-to-back and secured together by any suitable means, such as welding, an adhesive, or mechanical fasteners, or a single support may have electrode layers deposited on opposite sides thereof in the manner of a lead-acid bipolar battery. Terminals are connected to the two endmost cells.

The invention further provides an improved form of dual battery of the type including a main battery and a reserve battery connected in parallel to common positive and negative terminals and having electrical connections that draw power selectively from the main and reserve battery under different conditions, such as upon actuation of a switch, upon starting at a cold temperature or when the main battery charge is low, or the like. The reserve battery is a capacitive battery as described herein which can provide a brief but powerful current suitable for starting a vehicle. The main battery is preferably a standard 12-volt lead-acid SLI (starting, lighting and ignition) battery.

These and other aspects of the invention are described in detail hereafter. In the description which follows, "conductive" refers to electrical conductivity.

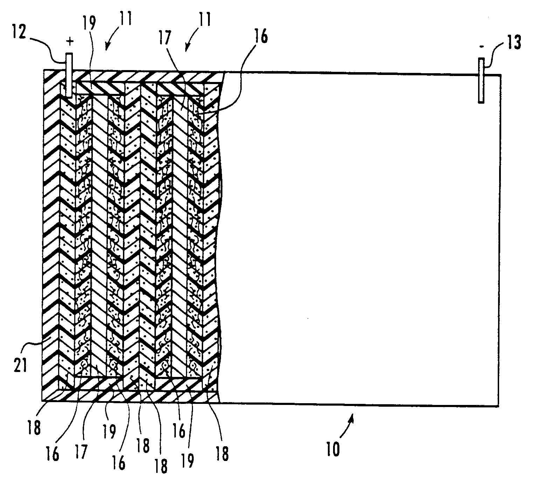

### BRIEF DESCRIPTION OF THE DRAWING

The invention will be described with reference to the accompanying drawing, which illustrates a capacitive battery according to the invention, partly in section.

### DETAILED DESCRIPTION

Referring to the drawing, a capacitive battery 10 according to the invention includes a stack of capacitive battery cells 11, a positive terminal 12 at one end of the stack, and a negative terminal 13 at the other end of the stack. Each cell 11 comprises a pair of spaced electrodes 16 having a separator 17 interposed therebetween. The outsides of each pair of electrodes 16 are covered by a pair of conductive supports in the form of sheets 18. A non-conductive seal or gasket 19 spans the inner periphery of each pair of electrodes 16 and prevents leakage, evaporation and/or contamination of the liquid electrolyte in which separator 17 and the insides of electrodes 16 are immersed. Adjoining sheets 18 are stacked back-to-back as shown to permit current flow, or a single sheet can have two electrodes on opposite faces thereof, as mentioned above. Cells 11 are surrounded by a suitable housing 21, such as a polypropylene battery case through which terminals 12, 13 extend.

The electrolyte may be any acidic or basic electrolyte that has good conductivity, that is, greater than 0.1 Ω⁻¹·cm⁻¹, preferably from about 0.1 to 1.0 Ω⁻¹·cm⁻¹. An aqueous sulfuric acid electrolyte of the type employed in lead-acid batteries, generally with a specific gravity in the range of 1.01 to 1.4, particularly about 1.2 to 1.3 and a conductivity of around 0.8 Ω⁻¹·cm⁻¹, is most preferred. However, since the battery of the invention operates by capacitance, rather than by electrochemical storage of energy as in a lead-acid battery, the specific electrolyte used in not critical. Other electrolytes may be used, for example, aqueous HCl or phosphoric acid, or an alkaline electrolyte such as LiOH, NaOH, or KOH.

The supports, or sheets 18, may comprise a sheet or layer of any conductive material which has sufficient strength to provide mechanical support to the electrode layer. The sheets 18 must also be stable in the acid or base used as the electrolyte and impermeable to the electrolyte. Such a support can be made of a conductive composite or a metal, with or without surface treatments. The metal can be gold, tantalum, titanium, or lead, optionally coated with a conductive, sulfuric-acid resistant compound such as barium metaplumbate or others as disclosed in U.S. Patent Nos. 5,045,170 and 5,143,806, the contents of which are incorporated by reference herein.

The conductive composite is a plastic matrix filled with conductive particles or conductive fibers, for example, of the type known for use in bipolar lead-acid batteries. The conductive fillers include but are not limited to powder of above mentioned metals, carbon, TiOₓ (1.75 ≦ x ≦ 1.9), WC, WO_{y} (2.6 ≦ y ≦ 2.9), TiSi₂, MnSi₂, NbC, NbSi₂, TaB, TaC, TaN, TaSi_{z} (0.4 ≦ z ≦ 2.0) and barium metaplumbate, BaPbO₃.

Preferred plastics for the plastic matrix include polyolefins such as polyethylene (PE), polypropylene (PP), polybutylene, polytetrafluoroethylene (PTFE), or polysulfone. In one preferred embodiment, the support sheet 18 is a laminate of an inner layer of carbon/PE laminated with a outer layer of carbon/PE reinforced with from 5 to 30 wt. % of reinforcing fibers such as glass fibers to provide enhanced strength.

The thickness of sheets 18 is not critical, but preferably varies from 0.001 cm to 0.2 cm for a metal sheet. The lower limit represents the thinnest gold foil available, whereas above 0.2 cm renders the support more expensive and heavy without any significant gain in performance. For plastic composite supports, the preferred range of thickness is from about 0.004 cm to 0.20 cm, more particularly 0.01 cm to 0.10 cm for optimum strength and performance without using excess material.

The conductivity of a metallic support has a known, fixed value depending on the metal selected. For a composite support, the composite should be designed to have a conductivity in the range from 0.1 Ω⁻¹·cm⁻¹, to 1000 Ω⁻¹·cm⁻¹, preferably from 1.0 Ω⁻¹·cm⁻¹ to 1000 Ω⁻¹·cm⁻¹. Excessively low conductivity impedes current flow and prevents the battery from functioning, whereas a high loading level of the filler achieving a conductivity greater than 1000 Ω⁻¹·cm⁻¹ would render the composite support mechanically less stable. The following are examples of preferred PE composite supports:

| Filler | Loading (wt.%) | Conductivity |
|---|---|---|
| NbC | 92.31 | 270.3 |
| TiSi₂ | 86.6 | 232.6 |
| Ta₅Si₃ | 95.36 | 142.9 |
| TaB | 94.65 | 108.7 |
| NbSi₂ | 89.9 | 65.8 |
| TaSi₂ | 93.52 | 55.6 |
| TaN | 96.26 | 25.3 |
| TaC | 95.64 | 12.4 |
| TaSi₂ | 86.5 | 3.46 |
| TiOₓ | 86.6 | 1.85 |
| C | 16.0 | 1.11 |
| MnSi₂ | 89.2 | 1.07 |
| WOₓ | 85.9 | 1.00 |
| BaPbO₃ | 92.7 | 0.56 |

Carbon is the most preferred filler because it is light in weight and commonly available. The amount of the filler will generally range from about 10 to 99 wt. %, the balance (1 to 90 wt.%) being the plastic. Specific amounts vary depending on the density of the filler and the properties of the plastic, but in all cases the amount is selected to ensure that the supports remain impermeable to the electrolyte.

The electrodes 16 are may be of the type used in an air cathode battery. Like sheets 18, the electrodes are preferably made of a conductive composite, and for that purpose the various fillers discussed above are suitable. However, the electrode layers are generally porous or microporous, whereas the supports, which might be made of the same plastic-conductive filler combination, are non-porous. The filler is preferably a compound having a high oxygen overvoltage in a aqueous sulfuric acid electrolyte, and for that purpose carbon and barium metaplumbate are most preferred. Other materials which are stable in sulfuric acid and can provide double layer capacity, such as TiOₓ, WOₓ, WC, and the like, can also be used.

Each electrode 16 must be sufficiently hydrophilic and porous to be wettable throughout with the aqueous electrolyte. Electrode porosity preferably ranges from 20% to 98%. Plastics such as PE, PP and especially PTFE are generally hydrophobic, and thus the amount of plastic in the electrode layers is much lower than the amount typically used in the support sheets 18. Generally, ranges of about 1 to 9 wt. % plastic and 91-99 wt. % filler are useful for most plastic/filler combinations. The optimum range will vary for each plastic-filler combination.

A plastic that fibrillates well provides good mechanical support for the conductive filler particles. For this purpose, a polyfluorocarbon such as polytetrafluoroethlyene (PTFE) is most preferred, generally with carbon as the filler. However, since PTFE is hydrophobic, the amount used is generally from 2 to 6 wt. %, preferably from 2 to 5 wt. %. Using less than about 2 wt.% PTFE gives inadequate strength and the electrode layer may fall apart. If more than 5 to 6 wt. % is used, water is repelled and the cell capacitance drops, although values within the broader range of 1 to 9 wt.% may still be acceptable.

The dimensions of each electrode are determined based on the desired battery performance. Given a standard length and width, the thickness of the electrode may be adjusted as needed. For automotive applications, the capacitor battery of the invention should deliver a 100 to 500 amp current for about 0.02 to 2.0 seconds. In determining the needed thickness for a standard 14 cm by 23 cm electrode, the capacitance of carbon is used as the reference since its value is the highest.

To discharge from 1.09 V/cell to a 0.65 V/cell cut off at the two limits of current for the desired periods of time would require a capacitance ranging from 0.88 F/cell to 440 F/cell. Each capacitor would have a capacitance ranging from 1.76 F to 880 F. The theoretical capacitance of carbon is 40 F/cm³. The total volume of carbon required would be 0.044 cm³ to 22 cm³. The practical surface area of a capacitor battery varies from 100 cm² to about 450 cm². The thickness of the electrode would therefore range from 0.0001 cm to 0.30 cm, preferably from 0.01 cm to 0.22 cm (or 0.30 cm). Other thicknesses would be used for other applications.

Separator 17 may be a porous polymer membrane, glass fiber mat, ceramic paper, or any other porous material stable in dilute sulfuric acid. The thickness of the separator 17 generally varies from 0.002 cm to 0.2 cm, preferably 0.002 cm to 0.05 cm, for preferred embodiments of the invention wherein a sulfuric acid electrolyte is used. The porosity of separator 17 can range from 40% to 99.9%, preferably 75% to 99.9%.

Seals 19 are made of a non-conductive, adhesive sealing material that is resistant to the electrolyte, such as neoprene rubber. In the alternative, sheets 18 may be combined with seals 19 in the same manner as in known bipolar batteries. The center of the sheet contains the conductive filler, and the outside of the sheet, including plastic flanges corresponding to seal 19, lack the conductive filler. Each sheet in the stack is joined to the adjoining sheet(s) by bonding together the non-conductive plastic flanges by known methods such as ultrasonic welding.

Each cell 11 has a voltage of about 1 V. Since water decomposes at 1.23 V, 1 V or slightly higher (up to about 1.2 V) represents a practical upper limit for the cell voltage. The electrolyte in the sealed cell is preferably free of air, since air will cause self-discharge. Accordingly, to provide a 12-volt battery of the type used in automotive applications, 11 or more cells are stacked as shown in the drawing. The terminals 12, 13 may be embedded in the plastic of the outermost support layers 18 at opposite ends of the battery. When the resistance of the external circuit is negligible, the battery is essentially discharged against its own internal resistance.

A process for making a capacitive battery 10 according to the invention combines air-cathode manufacturing technology and pasting technology used in the manufacture of lead-acid batteries. One way to build a carbon capacitive battery is to mix carbon powder with acid and then paste the mixture onto a support. This wet process is not easy to handle and the performance of each capacitive cell is very sensitive to the mix ratio. Furthermore, oxygen is known to contribute to self discharge of a double layer capacitor. There is no economical way to prevent oxygen from contaminating the carbon/acid mix in this wet process.

An alternative approach disclosed herein is a dry process which combines the technology of air-cathode manufacturing and plate pasting for a lead-acid battery. There are two process options for the dry process according to the invention. In the first, a completely dried carbon-PTFE mixture is rolled into sheets of desired thickness, cut to size, and then laminated with the bipolar support. This option provides better control in the loading of carbon. In the second, the mix with most of water filtered off is directly pasted onto the support, then flash-dried. This option saves two steps but may require better control of loading of the filler material. PTFE particles in the mix become fibers during rolling or pasting to form a network to bind carbon particles. In the electrolyte fill step, the battery is vacuumed, and deaerated sulfuric acid is added to eliminate contamination by oxygen. Deaeration may be carried out by bubbling inert gas such as nitrogen or argon through the electrolyte for a sufficient period of time. The battery is completely sealed after acid fill, e.g., by closing the fill hole in the seal.

Advantages of this process over the conventional process for making a carbon double layer capacitor include ease of handling and control, automation, oxygen elimination, and the capability to be applied to other materials such as BaPbO₃, TiOₓ, and WC, as well as fibrillatable plastics other than PTFE. The disclosed process can be used to make cells according to the invention or capacitors for other uses.

A capacitor battery with according to the invention comparable in size to an SLI automotive battery is capable of delivering more than 100 amperes for more than one second. A battery according to the invention can be hybridized with the main lead-acid battery of a vehicle, i.e., substituted as the reserve or auxiliary battery in a manually or automatically switched dual battery of any of U.S. Patent Nos. 5,002,840 and 5,162,164, or of commonly assigned applications Serial No. 07/656,772, filed February 15, 1991 or Serial No. 07/917,581, filed July 21, 1992, the entire contents of which are hereby incorporated herein by reference. In the alternative, a capacitive battery of the invention can be used as a stand-alone extra battery for starting a car or other vehicle.

The following examples illustrate the invention:

### EXAMPLE 1

A 12 V, eleven cell double layer capacitor battery of the invention was constructed as follows. One hundred grams Pittsburgh carbon was mixed with 400 ml dilute Teflon® dispersion. The dispersion was made by diluting Teflon®-30 (du Pont), which contained 59.4% by volume solid Teflon® and 5.3% wetting agent, with water. The mixture was heated to 60°C for 20 minutes and then filtered. The solid was washed with three parts of water at 60°C followed by one wash with water at room temperature, and then dried at 90°C overnight. Teflon® content in this mixture was 5.3% by weight. The carbon was wettable by acid.

In order to reduce the internal impedance, Celgard 3501 with 48% porosity was used as the separator. The features of the battery were:

| | |
|---|---|
| Number of cells: | 11 |
| Electrode thickness: | 0.03" |
| Separator: | 0.001" Celgard 3501 |
| Support: | 0.0618 cm thick carbon plastic |
| Acid: | SG = 1.245 |
| Resistivity: | Support: 5.67 Ω·cm |
| | Electrode: 0.284 Ω·cm |
| | Acid: 1.22 Ω·cm |
| Electrode area: | 17 cm² |
| Calculated internal resistance: | Support: 0.247 Ω |
| | Electrode: 0.018 Ω |
| | Separator: 0.004 Ω |
| | Total: 0.269 Ω |
| Measured internal resistance: | 0.25 Ω@ 1 kHz |
| Measured area resistance: | 4.25 Ω·cm² |
| Total capacitance: | 29.1 F, or 1.7 F/cm², or 31.4 F/cm³ |
| Maximum current density to 7.2V: | about 0.2 A/cm² |

The carbon plastic support was a laminate of two carbon/PE sheets with one filled with about 10 wt.% glass fiber as a reinforcing agent. Two support sheets with embedded copper screens served as the end blocks. Rectangular neoprene gaskets were used to separate supports. The cells were compressed between two 0.5" Lexan boards with bolts and nuts.

The overall internal resistance of this battery was high. However, 91% of this was due to the resistivity of the support. The performance of this battery can be easily improved by reducing the support resistivity. The sulfuric acid electrolyte was not deaerated, and thus the battery therefore suffered from self-discharge. The specific capacitance was about 80% of the theoretical value. This can be improved by further lowering the Teflon® content, for example, to 2.5%. The equivalent power density at 2.5 seconds was 559 W/kg or 584 W/L. For one second discharge, the maximum power was 836 W/kg or 873.6 W/L.

### EXAMPLE 2

Teflon® was dispersed into barium metaplumbate powder (-200 mesh) at a loading level of 8.3% using the process in Example 1. The resistivity of the matrix was measured to be 0.65 Ω·cm. The surface area of the matrix was measured to be 1.6 m²/g, compared to 1200 m²/g for carbon. The measured double layer capacitance was very low due to the low surface area of large BaPbO₃ particles.

### EXAMPLE 3

Teflon® at a loading level of about 5% was dispersed into WO₂, WC, WO_{2.9}, or TiOₓ using the same process described in Example 1. The resulting mix could be easily pasted onto a lead expanded metal grid.

### COMPARATIVE EXAMPLE 1

A 12 V, eleven cell double layer capacitor battery of the invention was constructed as follows. One hundred grams Pittsburgh carbon was mixed with 400 ml dilute Teflon® dispersion. The dispersion was made by diluting 74.8 g Teflon®-30 (du Pont), which contained 59.4% by volume solid Teflon® and 5.3% wetting agent, with water. The mixture was heated to 60°C for 20 minutes and then filtered. The solid was washed with three parts of water at 60°C followed by one wash with water at room temperature, and then dried at 90°C overnight. Teflon® content in this mixture was 29.1% by weight. The dry material had a resistivity of 1.25 Ω·cm and was not very wettable by acid.

### COMPARATIVE EXAMPLE 2

The process of Comparative Example 1 was repeated with less Teflon®. 37.4 g Teflon®-30 instead of 74.8 g were diluted to 400 ml. The Teflon® content in the mix was reduced to 17.0% and the resistivity reduced to 0.83 Ω·cm. The material was pasted directly onto a carbon plastic support which was a lamination of two pieces of carbon/PE composite with one piece reinforced with glass fibers. The specific capacitance of this battery was 6.6 F/cm³, far lower than the theoretical value of about 40 F/cm³. One cause of the low specific capacitance was the high Teflon® content, which rendered the carbon less wettable.

### EXAMPLE 4

The process of Comparative Example 1 was repeated with less Teflon®. 4.1 g Teflon®-30 instead of 74.8 g were diluted to 400 mL. The Teflon® content in the mix was reduced to 2.2% and the resistivity reduced to 0.05 Ω·cm. The specific capacitance of a battery made with this mix was 37.4 F/cm³, about 93% of the theoretical value.

It will be understood that the foregoing description is of preferred exemplary embodiments of the invention, and that the invention is not limited to the specific forms shown. Modifications may be made in the design and arrangement of the elements without departing from the scope of the invention as expressed in the appended claims.

## Claims

1. A capacitive battery cell (11), comprising:
a pair of conductive, hydrophilic electrodes (16, 16) which can be charged to capacitively store electrical energy;
a separator (17) interposed between the electrodes in contact therewith;
an aqueous electrolyte wetting the separator and electrodes;
a pair of electrically conductive supports (18, 18) substantially impervious to the electrolyte superposed on each electrode on the outsides thereof opposite the separator; and
a seal (19) that retains the electrolyte between the electrodes.

2. The cell of claim 1, wherein the electrodes (16, 16) consist essentially of thin, porous sheets of a particulate, electrically conductive material distributed on a fibrillated plastic, and the supports (17) comprise substantially non-porous sheets consisting essentially of a conductive metal or a conductive composite made of plastic containing a conductive filler.

3. The cell of claim 2, wherein the electrodes (16, 16) consist essentially of about 1 to 9 wt. % of the fibrillated plastic, and the balance is essentially the particulate, electrically conductive material, and the electrically conductive material is selected from the group consisting of gold, tantalum, titanium, lead, carbon, TiOₓ (1.75 ≦ x ≦ 1.9), WC, WO_{y} (2.6 ≦ y ≦ 2.9), TiSi₂, MnSi₂, NbC, NbSi₂, TaB, TaC, TaN, TaSi_{z} (0.4 ≦ z ≦ 2.0) and BaPbO₃.

4. The cell of claim 3, wherein the supports (18, 18) comprise sheets consisting essentially of about 1 to 90 wt. % of a polyolefin filled with about 10 to 99 wt. % of a conductive particulate material which may be the same as or different from the conductive particulate material in the electrodes (16, 16).

5. A capacitive battery (10), comprising:
a plurality of cells (11), each cell comprising a pair of conductive, hydrophilic electrodes (16, 16) which can be charged to capacitively store electrical energy, a separator (17) interposed between the electrodes in contact therewith, an aqueous electrolyte wetting the separator and electrodes, a pair of electrically conductive supports (18, 18) substantially impervious to the electrolyte superposed on each electrode on the outsides thereof opposite the separator, and a seal (19) that retains the electrolyte between the electrodes;
electrical connections connecting the cells in series; and
positive (12) and negative (13) terminals connected to the endmost cells in the series.

6. The battery (10) of claim 5, wherein the electrodes (16, 16) consist essentially of thin, porous sheets of a particulate, electrically conductive material distributed on a fibrillated plastic, and the supports (18, 18) comprise substantially non-porous sheets consisting essentially of a conductive metal or a conductive composite made of plastic containing a conductive filler.

7. The battery (10) of claim 6, wherein the electrodes consist essentially of about 1 to 9 wt. % of the fibrillated plastic, and the balance is essentially the particulate, electrically conductive material is selected from the group consisting of gold, tantalum, titanium, lead, carbon, TiOₓ (1.75 ≦ x ≦ 1.9), WC, WO_{y} (2.6 ≦ y ≦ 2.9), TiSi₂, NbC, NbSi₂, TaB, TaC, TaN, TaSi_{z} (0.4 ≦ z ≦ 2.0) and BaPbO₃.

8. The battery (10) of claim 12, wherein the supports (18, 18) comprise sheets consisting essentially of 1 to 90 wt. % of a polyolefin filled with about 10 to 99 wt. % of a conductive particulate material which may be the same as or different from the conductive particulate material in the electrodes (16, 16).

9. In a dual battery including a main battery and a reserve battery connected in parallel to common positive and negative terminals and electrical connections that draw power selectively from the main and reserve battery under different conditions, the improvement wherein the reserve battery is a capacitive battery (10).

10. A process for making a capacitive battery cell, comprising:
forming a dry mixture of a plastic and a particulate, electrically conductive material;
rolling the mixture into a sheet under conditions effective to fibrillate the plastic to form a fibrous network that retains the conductive particles;
laminating the sheet with a conductive support to form a first support and electrode;
repeating the preceding three steps to form a second support and electrode;
interposing a porous separator between the first and second electrodes in contact therewith;
forming a seal about a space between the electrodes, which space contains the separator; and
filling the space with an aqueous electrolyte;
deaerating the electrolyte; and
closing the seal to render the space air-tight.
